# EUROPÄISCHE PATENTSCHRIFT

(11) **EP 1 704 092 B1**
(45) Veröffentlichungstag und Bekanntmachung des Hinweises auf die Patenterteilung: **02.07.2014**
(21) Anmeldenummer: 05700856.7
(22) Anmeldetag: 12.01.2005
(51) Int. Cl.: B64D 11/06

(54) **FAHRZEUGSITZ, INSBESONDERE FLUGGASTSITZ**
VEHICLE SEAT, PARTICULARLY AN AIR PASSENGER SEAT
SIEGE POUR VEHICULE, EN PARTICULIER POUR PASSAGER D'UN AERONEF

(30) Priorität: 12.01.2004 DE 102004002169
(43) Veröffentlichungstag der Anmeldung: 27.09.2006
(73) Patentinhaber: Airbus Operations GmbH, 21129 Hamburg (DE)
(72) Erfinder: ILIAS, Erwin, 74523 Schwäbisch Hall (DE); HEUSER, Jörg, 74523 Schwäbisch Hall (DE)
(74) Vertreter: Hauck Patent- und Rechtsanwälte
(86) Internationale Anmeldenummer: PCT/EP2005/000237
(87) Internationale Veröffentlichungsnummer: WO 2005/066023

(56) Entgegenhaltungen:
- WO-A-02/066283
- DE-A1- 2 153 578
- DE-A1- 3 433 590
- DE-C1- 10 214 104
- US-A- 2 595 582
- US-A- 3 744 843
- US-A- 3 762 766
- US-A- 5 540 483

## Beschreibung

Die vorliegende Erfindung betrifft einen Fahrzeugsitz, insbesondere einen Fluggastsitz, mit einem Sitzgestell, das mehrere Sitzteiler aufweist, zwischen denen jeweils ein Sitzteil und eine Rückenlehne als dem Sitzgestell angelenkt ist, die über eine Verstelleinrichtung relativ zu den Sitzteilern in ihrer Position verstellbar ist.

Aus DE 102 14 104 C1 ist ein Fluggastsitz mit einem klappbaren Sitzteil bekannt. Die Rückenlehnen sind jeweils an benachbarten Sitzteilern verschwenkbar angelenkt. Das Sitzgestell besitzt einen horizontal verlaufenden Tragbalken, an dem horizontal verlaufende Konsolen befestigt sind. Das freie Ende der Konsolen ist mit einer Gasfeder verbunden, deren freies Ende ein Verbindungsstück zur Verbindung mit der Rückenlehne besitzt. Durch Verstellen der Länge der Gasfeder wird die Rückenlehne in die gewünschte Position geneigt. An dem Tragbalken sind im Bereich des klappbaren Sitzteils keine Verstelleinrichtungen für die Rückenlehne angeordnet. Die Rückenlehne zu dem klappbaren Sitzteil wird durch eine, unter dem benachbarten Sitzteil angeordnete Gasfeder verstellt, wobei deren Kraft über einen im Sitzteiler gelagerten Bolzen auf die Rückenlehne des benachbarten Sitzes übertragen wird. Als nachteilig an dieser Konstruktion hat sich herausgestellt, daß mit dieser lediglich ein Sitz des Fluggastsitzes klappbar ausgestaltet werden kann, da ansonsten die Konsolen der Federn für die Anlenkung der Rückenlehnen im Wege wären. Gerade bei längeren Sitzreihen ist es jedoch wünschenswert, zwei oder mehr, auch nebeneinander liegende Sitzteile klappbar zu gestalten. Ferner hat sich herausgestellt, daß die an dem Bolzen zur Übertragung der Kraft auf die benachbarte Rückenlehne angreifenden Momente so groß sind, daß der Bolzen und die zugehörigen Bauteile massiv ausgelegt werden müssen, wodurch sich Herstellkosten und Gewicht erhöhen.

Aus DE 195 34 024 C2 ist eine Sitzgruppe bekannt, bei der mindestens ein Sitzteil über eine Koppeleinrichtung hochklappbar ist. Das Hochklappen des Sitzteils erfolgt über eine dem Sitzteil zugeordnete Armlehne. Eine Verstelleinrichtung für die Rückenlehne ist nicht näher beschrieben.

Aus DE 34 33 590 A1 ist ein Fluggastsitz bekannt, dessen Sitzgestell zwei Traversen und einen Längsholm aufweist.

Der Erfindung liegt die Aufgabe zugrunde, einen Fahrzeugsitz mit mindestens einem hochklappbaren Sitzteil zu schaffen, dessen Sitzgestell einen horizontal verlaufenden Träger aufweist und eine Rückenlehne über eine einfache und robuste Verstelleinrichtung geneigt werden kann.

Erfindungsgemäß wird die Aufgabe durch einen Fahrzeugsitz mit Merkmalen aus Anspruch 1 gelöst. Vorteilhafte Ausgestaltungen bilden die Gegenstände der Unteransprüche.

Der erfindungsgemäße Fahrzeugsitz besitzt ein Sitzgestell mit mehreren Sitzteilern. Zwischen zwei Sitzteilern sind jeweils eine Rückenlehne und ein Sitzteil angeordnet. Jede Rückenlehne ist zwischen zwei angrenzenden Sitzteilern an dem Sitzgestell direkt oder an einem oder beiden Sitzteilern angelenkt und über eine Verstelleinrichtung relativ zu den Sitzteilern in ihrer Position verstellbar. Die Sitzteile sind jeweils zwischen den Sitzteilern an dem Sitzgestell direkt oder an einem oder beiden Sitzteilern befestigt, wobei mindestens ein Sitzteil in eine annähernd vertikale Position klappbar ist. Die Verstelleinrichtung für die dem klappbaren Sitzteil zugeordnete Rückenlehne ist zwischen den beiden die Rückenlehne einfassenden Sitzteilern an einem dieser Sitzteiler angeordnet und besitzt eine an dem Sitzteiler angelenkte Hebeleinrichtung sowie ein mit dem Sitzteiler verbundenes Federelement, das an einem Ende an einem ersten Hebelarm angelenkt ist, wobei der zweite Hebelarm der Hebeleinrichtung mit der Rückenlehne verbunden ist. Die erfindungsgemäße Verstelleinrichtung ist also jeweils zwischen den Sitzteilern eines hochklappbaren Sitzteils angeordnet, so daß es möglich ist, zwei oder mehr Sitzteile für den Fahrzeugsitz hochklappbar auszulegen. Ferner wird die Kraft des Federelements auf die Rückenlehne über eine an dem Sitzteiler angelenkte Hebeleinrichtung übertragen, so daß Torsionsmomente an der Hebeleinrichtung vermieden werden und diese leichter und kostengünstiger hergestellt werden kann. Ferner besitzt die Hebeleinrichtung den überaus wichtigen Vorteil, daß sie eine Anordnung des Federelements relativ zu dem Sitzgestell erlaubt derart, daß das Federelement nicht in den durch den hochklappbaren Sitz gebildeten Freiraum vorsteht oder lediglich geringfügig in diesen hineinragt. So werden für einen Fahrgast gefährliche Stoßkanten und Stolperfallen vermieden. Die direkte Verbindung zwischen Sitzteiler und Rückenlehne ohne den Umweg über eine Konsole und den Ovalhauptholm führt zusätzlich zu einer Verringerung des Spiels, da die kinematische Kette über weniger verbundene Elemente erfolgt.

Zweckmäßiger Weise besitzt das Sitzgestell einen im wesentlichen horizontal verlaufenden Träger, der mit den Sitzteilern verbunden ist. Mindestens zwei der Sitzteiler sind mit Füßen ausgestattet. Alternativ können Sitzteiler und -füße in dem Sitzgestell als separate Bauteile angebracht sein.

Bevorzugt besitzt für jede Rückenlehne jeweils einer der zugeordneten Sitzteiler einen horizontal verlaufenden Arm, der von der Rückenlehne fortweist. Zweckmäßiger Weise ist das Federelement an dem Arm befestigt. Gegenüber bekannten Sitzgestellen, beispielsweise DE 102 14 104 C1, ergibt sich hier der Vorteil, daß für die Anbringung des Federelements nicht ein gesonderter Träger oder eine Konsole an dem Tragbalken angebracht werden muß.

Erfindungsgemäss ist das klappbare Sitzteil an dem Sitzteiler mit mindestens einem Tragarm angelenkt. Für das klappbare Sitzteil ist eine Rückstelleinrichtung vorge- sehen, die dieses in seine annähernd vertikale Position zurückstellt. Die Rück- stelleinrichtung besitzt bevorzugt ein Federelement, das im wesentlichen entlang dem Sitzteiler verläuft. Durch das Federelement kann beispielsweise das nicht belastete Sitzteil selbsttätig hochgeklappt werden, um den Raum vor dem Sitz frei- zugeben.

Anhand der Figuren werden bevorzugte Ausgestaltungen der Erfindung nachfolgend näher erläutert. Es zeigt:
- Figur1: ein Sitzgestell mit der erfindungsgemässen Verstelleinrichtung für Rückenlehnen,
- Figur 2: einen Sitzteiler mit Verstelleinrichtung für die Rückenlehne und Klappeinrichtung für das Sitzteil,

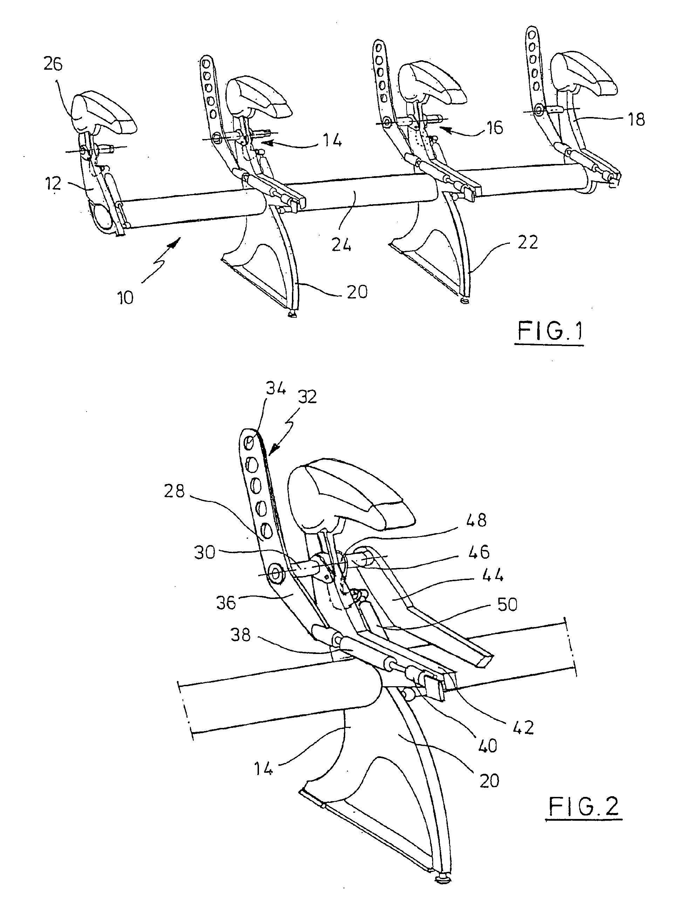

Figur 1 zeigt ein Sitzgestell 10 mitSitzteilem 12 bis 18, wobei die mittleren Sitz- teiler 14 und 16 mit Füssen 20,22 versehen sind. Das Sitzgestell 10 besitzt einen Träger 24, der im wesentlichen horizontal durch die Sitzteiler 20 und 22 verläuft und die Sitzteiler 12 und 18 ohne Füsse trägt. Der Träger 24 ist als Rohr mit ovalem Querschnitt ausgeführt

### Jeder der Sitzteiler ist mit einer Armlehne 26 versehen.

Die Verstelleinrichtung für die Rückenlehne zwischen den Sitzteilern 12 und 14 besitzt einen Hebel 28, der über ein Rohr 30 an dem Sitzteiler drehbar gelagert ist. In dem dargestellten Beispiel ist der Hebel 28 zur Materialeinsparung an einem Ende 32 mit Bohrungen 34 versehen, wobei das Ende 32 in der Rückenlehne angeordnet ist und die Kraft auf die Rückenlehne überträgt. Das zum Träger 24 weisende Ende 36 des Hebels 28 ist mit einer Gasfeder38 verbunden. Das freie Ende der Gasfeder 38 ist über eine Anbindung 40 an dem Sitzteiler 14 gehalten. Der Sitzteiler ist im Bereich der Anbindung 40 mit einem vorstehenden Arm 42 versehen. Dies besitzt den Vorteil, dass die auf die Rückenlehne aufgebrachte Kraft über den Hebel 28 und die Feder 38 nicht in den Träger 24 eingeleitet wird, sondern über den Arm 42 in den Sitzteiler.

Zur Verstellung der Position der Rückenlehne schwenkt der Hebel 28 um seine Lagerung 30. Wird die Gasfeder 38 ausgefahren, so schwenkt das Ende 32 des Hebels 28 nach vorne hin zu dem Sitzteil. Wird die Gasfeder 38 eingefahren, so schwenkt das Ende 32 des Hebels 28 von dem Sitzteil fort und die Rückenlehne geht zurück.

Ebenfalls in Figur 2 ist die Hochklappeinrichtung für das klappbare Sitzteil darge- stellt. Ein Arm 44 ist über einen Bolzen 46 ebenfalls an dem Sitzteiler 14 angelenkt. Hierbei fallen die Schwenkachsen des Armes 44 und des Hebels 28 zusammen, wodurch eine grössere Stabilität für den Sitzteiler erzielt wird. Ein zweiter Arm derHochklappeinrichtung ist an dem gegenüberliegenden Sitzteilerfreidrehend gelagert, wobei die Schwenkachsen beider Arme aufeinander liegen. Auf dem Bolzen 46 ist drehfest ein Hebelelement48 angeordnet, das an seinem freien Ende mit einer zweiten Feder 50 verbunden ist. Durch Verlängern bzw. Verkürzen der Feder 50 klappt das nicht belastete Sitzteil hoch.

Bei dem in Figur 1 dargestellten Sitzteil ist für jeden Sitz an dem rechten Sitzteiler (bezogen auf eine in dem Sitz sitzende Person) der Hochklappmechanismus für das Sitzteil angebracht. Für eine linke Sitzreihe (gesehen in Flugrichtung) ist es sinnvoll, die Feder für die Hebemechanik des Sitzes rechts vom Passagier anzubringen. Für eine rechte Sitzreihe ist es sinnvoll, sie links vom Passagier anzubringen. Es handelt sich also um einen Sitz bei dem jedes Sitzteil klappbar ist. Bevorzugt kann hier das Sitzteil mit einer Abstützfläche versehen sein, an der sich ein Passagier an dem hochgeklappten Sitzteil abstützen kann. In Figur 1 ist übersichtshalber der Trägerarm 44 für das Sitzteil nicht dargestellt. An dem auf eine sitzende Person bezogenen linken Sitzteiler ist jeweils der Hebel 28 der Verstelleinrichtung für die Rückenlehne vorgesehen.

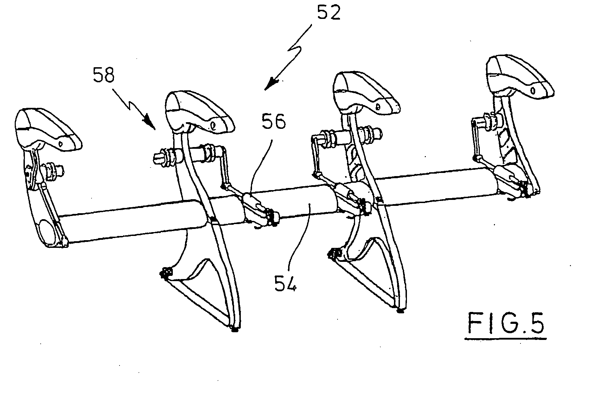

Bei der erfindungsgemässen Lösung wird deutlich, dass jedes Sitzteil an dem Sitz- gestell hochklappbar ist. Bei dem aus dem Stand der Technik bekannten Sitzgestell 52 in Fig. 5 sind an dem mittleren Sitz zwei Verstelleinrichtungen für die Rückenlehne angebracht, wobei die Kraft einer Gasfeder 56 über einen Bolzen 58 durch den zugehörigen Sitzteiler auf die Rückenlehne (nicht dargestellt) übertragen wird. Auch wird aus Figur 5 deutlich, dass die Federelemente für die Verstellung der Rücken- lehne deutlich weiter von dem Trägerbalken 54 abstehen. Die erfindungsgemässe Verwendung eines Hebels 28 erlaubt im Gegensatz dazu, das zugehörige Feder- element weniger weit in den Raum vorstehend an dem Sitzteiler anzuordnen.

Bei aufrechter Rückenlehne ist die Feder entspannt, während bei nach hinten geschwenkter Rückenlehne die Feder gespannt ist. Durch Auslösen der Feder über eine Verriegelung kann die Rückenlehne manuell nach hinten geschwenkt werden. Durch Lösen der Verriegelung bleibt die Rückenlehne in der aktuellen Position. Durch Lösen der Verriegelung und Entlasten der Rückenlehne schwenkt die Rückenlehne in die aufrechte Position zurück. Wird die Verriegelung der Feder (nicht dargestellt) gelöst, kann die Rückenlehne nach hinten geschwenkt werden, wobei eine Relativbewegung zwischen dem Sitzfuss bzw. dem Sitzteiler und der Rückenlehne entsteht. Diese Bewegung wird auf einen Kipphebel übertragen. Der Kipphebel dreht von oben gesehen in Uhrzeigersinn. Durch die Drehung des Kipp- hebels wird die Relativbewegung zwischen Sitzteiler und Rückenlehne (in Flugrichtung) umgewandelt in eine Bewegung senkrecht zur Flugrichtung. Die Bewegung des Hebels komprimiert die Feder. Durch Lösen der Verriegelung dekomprimiert die Feder. Die Rückenlehne bewegt sich wieder in die aufrechte Position.

## Patentansprüche

1. Fahrgastsitz, insbesondere Fluggastsitz, der folgendes aufweist:
• ein Sitzgestell (10) mit mehreren Sitzteilem (12,14, 16,18), das lediglich einen im wesentlichen horizontal verlaufenden Träger (24) besitzt, der mit den Sitzteilern verbunden ist,
• mehrere Rückenlehnen, die jeweils zwischen zwei Sitzteilern an dem Sitzgestell angelenkt und über jeweils eine Verstelleinrichtung relativ zu den Sitzteilern in ihrer Position verstellbar sind,
• mehrere Sitzteile, die jeweils zwischen den Sitzteilern (12,14, 16,18) an dem Sitzgestell befestigt sind und von denen mindestens eines in eine annähernd vertikale Position klappbar ist,
• die Verstelleinrichtung für die zum klappbaren Sitzteil gehörende Rückenlehne eine Hebeleinrichtung (28) und ein Federelement (38) aufweist, die Hebeleinrichtung (28) schwenkbar mit dem Sitzteiler verbunden ist, ein erster Hebelarm (36) der Hebeleinrichtung an einem Ende des Federelements (38) angelenkt ist und ein zweiter Hebelarm (32) der Hebeleinrichtung mit der Rückenlehne verbunden ist,
**dadurch gekennzeichnet, dass**
die Hebeleinrichtung (28) und das Federelement (38) an einem der das klappbare Sitzteil begrenzenden Sitzteiler auf der zum Sitzteil weisenden Seite angeordnet sind, und das Federelement (38) ebenfalls mit dem Sitzteiler verbunden ist.

2. Fahrgastsitz nach Anspruch 1 oder 2, **dadurch gekennzeichnet, daß** mindestens zwei Sitzteiler mit Füßen (20, 22) versehen sind.

3. Fahrgastsitz nach Anspruch 1 oder 2, **dadurch gekennzeichnet, daß** mindestens zwei Füße und die Sitzteiler als separate Bauteile an dem Sitz befestigt sind.

4. Fahrgastsitz nach Anspruch 1 oder 2, **dadurch gekennzeichnet, daß** für jede Rückenlehne jeweils mindestens einer der seitlichen Sitzteiler einen horizontal verlaufenden Arm (42) besitzt, der von der Rückenlehne fortweist.

5. Fahrgastsitz nach Anspruch 4, **dadurch gekennzeichnet, daß** die Federeinrichtung (38) an dem Arm (42) befestigt ist.

6. Fahrgastsitz nach einem der Ansprüche 1 oder 5, **dadurch gekennzeichnet, daß** das klappbare Sitzteil an dem Sitzteiler mit mindestens einem Tragarm (44) angelenkt ist.

7. Fahrgastsitz nach Anspruch 6, **dadurch gekennzeichnet, daß** der Tragarm (44) an dem Sitzteiler gegenüber der Hebeleinrichtung (28) angelenkt ist.

8. Fahrgastsitz nach Anspruch 6 oder 7, **dadurch gekennzeichnet, daß** eine Rückstelleinrichtung (46, 48, 50) das klappbare Sitzteil in seine vertikale Position zurückstellt.

9. Fahrgastsitz nach Anspruch 8, **dadurch gekennzeichnet, daß** die Rückstelleinrichtung ein Federelement (50) aufweist, das im wesentlichen entlang dem Sitzteiler verläuft.

## Claims

1. A passenger seat, particularly an air passenger seat, which comprises the following:
• a seat frame (10) with several seat dividers (12, 14, 16, 18), which has only one single essentially horizontally extending support (24) which is connected to the seat dividers,
• several backrests, each hinged on the seat frame between two seat dividers and being adjustable in their positions with respect to the seat dividers via one adjustment device for each backrest at a time,
• several seat parts, each of them being fastened on the seat frame between the seat dividers (12, 14, 16, 18) and from which at least one can be collapsed into an approximately vertical position,
• wherein the adjustment device for the backrest which belongs to the collapsible seat part comprises a lever device (28) and a spring element (38), the lever device (28) is pivotally connected to the seat divider, a first lever arm (36) of the lever device is hinged to one end of the spring element (38) and a second lever arm (32) of the lever device is connected to the backrest,
**characterised in that**
the lever device (28) and the spring element (38) are arranged on a seat divider limiting the collapsible seat part on that side which points towards the seat part, and that the spring element (38) is also connected to the seat divider.

2. The passenger seat according to claim 1, **characterised in that** at least two seat dividers are provided with feet (20, 22).

3. A passenger seat according to claim 1 or 2, **characterised in that** at least two feet and the seat dividers are fastened on the seat as separate assembly parts.

4. A passenger seat according to claim 1 or 2, **characterised in that** for each backrest, at least one of the lateral seat dividers at a time has an horizontally extending arm (42), which points away from the backrest.

5. The passenger seat according to claim 4, **characterised in that** the spring device (38) is fastened on the arm (42).

6. A passenger seat according to one of claims 1 or 5, **characterised in that** the collapsible seat part is hinged to the seat divider by at least one support arm (44).

7. The passenger seat according to claim 6, **characterized in that** the support arm (44) is hinged to the seat divider opposite to the lever device (28).

8. A passenger seat according to claim 6 or 7, **characterised in that** a resetting device (46, 48, 50) resets the collapsible seat part into its vertical position.

9. The passenger seat according to claim 8, **characterised in that** the resetting device has a spring element (50) which extends essentially along the seat divider.

## Revendications

1. Siège pour passager, en particulier pour passager d'un aéronef, comportant ce qui suit:
• une carcasse de siège (10) avec plusieurs diviseurs de siège (12, 14, 16, 18), qui a un seul support (24) qui s'étend sensiblement à l'horizontale et qui est relié aux diviseurs de siège,
• plusieurs dossiers de siège, chacun articulé sur la carcasse de siège entre deux diviseurs et étant ajustable en sa position par rapport aux diviseurs de siège au moyen d'un dispositif d'ajustage pour chaque dossier de siège,
• plusieurs coussins de siège dont chacun est fixé sur la carcasse de siège entre les diviseurs de siège (12, 14, 16, 18) et dont au moins un est rabattable dans une position approximativement verticale,
• dans lequel le dispositif d'ajustage pour le dossier de siège qui appartient au coussin de siège rabattable comporte un dispositif à levier (28) et un élément de ressort (38), le dispositif à levier (28) est relié au diviseur de siège de manière pivotante, un premier bras de levier (36) du dispositif à levier est articulé à une extrémité de l'élément de ressort (38) et un second bras de levier (32) du dispositif à levier est relié au dossier de siège,
**caractérisé en ce que**
le dispositif à levier (28) et l'élément de ressort (38) sont arrangés sur un diviseur de siège limitant le coussin de siège rabattable dans le côté dudit diviseur de siège qui montre au coussin de siège, et que l'élément de ressort (38) est aussi relié au diviseur de siège.

2. Siège pour passager selon la revendication 1, **caractérisé en ce que** au moins deux diviseurs de siège sont pourvus de pieds (20, 22).

3. Siège pour passager selon la revendication 1 ou 2, **caractérisé en ce que** au moins deux pieds et les diviseurs de siège sont fixés sur le siège comme des composants séparés.

4. Siège pour passager selon la revendication 1 ou 2, **caractérisé en ce que** pour chaque dossier de siège, au moins un des diviseurs de siège latéraux possède un bras qui s'étend à l'horizontale (42) et qui montre à l'écart du dossier de siège.

5. Siège pour passager selon la revendication 4, **caractérisé en ce que** le dispositif à ressort (38) est fixé sur le bras (42).

6. Siège pour passager selon une des revendications 1 ou 5, **caractérisé en ce que** le coussin de siège rabattable est articulé au diviseur de siège par au moins un bras de support (44).

7. Siège pour passager selon la revendication 6, **caractérisé en ce que** le bras de support (44) est articulé au diviseur de siège vis-à-vis du dispositif à levier (28).

8. Siège pour passager selon la revendication 6 ou 7, **caractérisé en ce que** un dispositif de rappel (46, 48, 50) remet le coussin de siège rabattable vers sa position verticale.

9. Siège pour passager selon la revendication 48 **caractérisé en ce que** le dispositif de rappel a un élément de ressort (50) qui s'étend sensiblement le long du diviseur de siège.
